# EUROPEAN PATENT SPECIFICATION

(11) **EP 4 454 059 B1**
(45) Date of publication and mention of the grant of the patent: **17.12.2025**
(21) Application number: 23798839.9
(22) Date of filing: 04.10.2023
(51) Int. Cl.: H01M 50/517, H01M 10/42, H01M 10/48, H01M 50/213, H01M 50/249, H01M 50/258, H01M 50/284, H01M 50/298, H01M 50/507, H01M 50/509, H01M 50/519, H01M 50/529, H01M 10/052

(54) **BATTERY MODULE OF THE TYPE THAT CAN BE DISASSEMBLED AND BATTERY PACK OBTAINED ASSEMBLING AT LEAST TWO SUCH BATTERY MODULES**
ZERLEGBARES BATTERIEMODUL UND MIT MINDESTENS ZWEI SOLCHEN BATTERIEMODULEN HERGESTELLTES BATTERIEPACK
MODULE DE BATTERIE DU TYPE DÉMONTABLE ET BLOC-BATTERIE OBTENU PAR ASSEMBLAGE D'AU MOINS DEUX TELS MODULES DE BATTERIE

(30) Priority: 06.10.2022 IT 202200020550
(43) Date of publication of application: 30.10.2024
(73) Proprietor: HYBA Ltd., London EC2A 4NE (GB)
(72) Inventor: GNESI, Edoardo, 56017 San Giuliano Terme (PI) (IT); CALDERONI PARRONCHI, Daniele, 50127 Firenze (IT); GROSSO, Andrea, London (GB); HERMANIN DE REICHENFELD, Costanza, 50023 Impruneta (FI) (IT); BORTONE, Francesco, 20133 MILANO (IT); PERANI, Michele, 24128 Bergamo (IT)
(74) Representative: ABM Agenzia Brevetti & Marchi
(86) International application number: PCT/IB2023/059964
(87) International publication number: WO 2024/075039

(56) References cited:
- EP-A1- 3 264 497
- CN-U- 206 480 686
- US-A- 3 181 974
- US-A1- 2011 177 373
- US-A1- 2021 083 248

## Description

### Field of the invention

The present invention relates to the industrial field of the supply devices for the sector of electric or hybrid vehicles, and in particular it relates to a module cells of the type that can be disassembled.

The invention, furthermore, relates to a battery pack obtained by assembling together more battery modules.

### Background of the invention

As it is known, several typologies of battery packs exist, also called multi-cells batteries, which are, in particular, used to supply electrical devices of different type, and in particular electric or hybrid vehicles, such as bicycles, motorcycles, and in general vehicles with 2, or more wheels.

In particular, in the case of electric or hybrid vehicles, these comprise one, or more, rechargeable battery packs, which supply the vehicle propulsion device. Normally, a battery pack is formed by a determined number of cells connected in series and/or in parallel in such a way to form as a whole a battery with a high store capacity of electrical energy, or to reach high values of the supplied electric power.

The different cells forming the battery pack can be held together by a wrapper made of plastic, or can be housed within a containment body.

The battery pack is normally associated to a control and management unit, normally indicated with the English acronyms BMS which stands for *"Battery Management System",* which controls the critical functions of the cells, in particular that the cells work in the correct balancing condition, in addition to control that the charging and discharging processes of each cell occur correctly, and to manage the communication with the external units.

Normally, a battery pack is obtained by connected in series the different battery modules each of which formed by a determined number of cells. Generally, each battery module provides a determined number of connecting bars, or *busbars,* which are made of a conductive material, normally copper, that are connected, normally by welding to respective leads of the conductive cable, to the positive terminals, or to the negative terminals, of the different cells of the pack in order to obtain a determined electrical connection scheme, for example, to connect in parallel to each other the different cells of the pack. In practice, the connection bars are long conductors insulated from the ground that collect and transmit the high current supplied by each of the cells forming a battery module.

A first drawback of the aforementioned type of the battery packs is the complex and long process needed to carry out the necessary welding, in fact, especially in the case of battery packs for electric vehicles, a battery pack is formed by hundreds of cells.

Furthermore, if the welding is not carried out correctly, it is possible to have large losses of efficiency of the battery pack and/or a reduction in the life of the battery. In particular, the presence also of small zones with high resistance at the welding zone can generate an amount of heat sufficient to degrade the battery and to cause early damages.

A further drawback of the battery packs as described above, that means obtained by assembling together and electrically connecting by welding the different parts which form the same, is that it is not possible to easily and quickly disassemble the different parts in order to carry out an ordinary or extraordinary maintenance operation and to proceed, in case, to replace of one or more damaged or worn components with new components.

Another drawback of the prior art battery packs is that, in order to be able to carry out the aforementioned control and management functions, a BMS unit is, normally, provided with one or more voltage sensors in particular to control the balance of the cells, and with one or more temperature sensors to control the temperature of the cells and to be able to immediately intervene if too high temperatures are measured thus avoiding damages, or fires, and guaranteeing this way that the necessary safety conditions are met.

However, the aforementioned sensors, in addition to the connectors that are necessary to be connected with other units, and the presence of microcontrollers make the prior art BMS unit cumbersome and expensive.

In the prior art solutions, which provide a connection of the connection bars or busbar without welding, the contact force with the terminal of the cell is exerted by an element made of metallic conductive material, generally a thin plate made of copper. However, the thin plate made of copper reaches the yield point with low loads losing the pre-set elastic force, i.e. has a low yield point which causes the contact force of the busbar on the terminal of the cell to be reduced.

Instead, in other cases, the elastic elements of contact are made of steels more or less harmonic in such a way to guarantee a constant compression. However, this type of material has an electrical resistance that is higher than the copper and causes overheating and losses of yield.

An example of a battery pack where both the electrical contact and the elastic force among the cells and the other components of the system is obtained by an element made of a metallic material is described in US2021083248. More precisely, the electrical contact among the terminals of the cells and a connection plate is provided by an element of contact made of a metal with elastic properties, in particular an elastic thin plate which is bent in such a way that the surfaces of contact of the cells are arranged at a determined angle with respect to each other. This assembly situation, in addition to the aforementioned drawbacks, on the basis of the expansions of the cells or the vibrations could produce *micro-fretting* phenomena. As it is known, with the expression *"fretting* corrosion" it is meant that a kind of damage that is caused by wear and, sometimes, by corrosion of the contact surfaces, in presence of small periodic movements of friction or collision, which, when the current is passing, produce *micro-arching.* Instead, in the absence of a corrosive environment we talk about *"fretting".*

The result of the aforementioned two effects combined with each other can be an uncontrolled overheating of the terminal of the cell and a wear of the same. In addition to the above, the micro-welding which are created in this way increase the resistance of the connection, thus increasing the temperatures and creating a sort of "knock-on effect" which prejudices the correct functioning of the battery pack.

Additional relevant prior art can be found in EP 3 264 497 A1, CN 206 480 686 U, US 2011/177373 A1 and US 3 181 974 A.

### Summary of the invention

It is therefore an object of the present invention to provide a battery module which is able to overcome the aforementioned drawbacks of the prior art solutions.

It is another object of the present invention to provide a battery module, in particular but not only for supplying electric vehicles, that allow to quickly and easily disassemble its components to be able to carry out ordinary and extraordinary maintenance operations, and that is able, at the same time, to assemble again the components at the end of the operation, after having, in case, carried out the replacement of one or more worn or damaged components, with components perfectly working.

It is also an object of the present invention to provide a battery pack that is obtained by assembling together more battery modules having analogous advantages.

These and other objects are achieved by a battery module comprising:
- a plurality of cells, in particular arranged according to at least one row, each cell of said plurality having a positive terminal and a negative terminal positioned at opposite ends;
- a first and a second connection bar, or *busbar,* positioned at opposite ends of the cells of the aforementioned plurality and configured to be electrically connected, respectively, to said positive terminals and to said negative terminals of said plurality of cells;
- a plurality of support bodies each of which comprising a respective plurality of housing portions configured to house, in use, respective end portions comprising said positive terminal, or said negative terminal, of a respective cell of said plurality of cells;

whose main characteristic is that each support body of said plurality is provided with a respective conductive element made of a conductive material and comprising a respective plurality of contact portions, each contact portion of said plurality being adapted to be positioned, in use, adjacent to a respective positive terminal, or to a respective negative terminal, of a respective cell of said plurality of cells;
that each conductive element comprises a respective connection portion;
that an engagement group is, furthermore, provided configured to move between a disengagement configuration, where said plurality of support bodies are not engaged to each other, and an engagement configuration, where said engagement group is arranged to removably mechanically engage said plurality of support bodies in a predetermined working position, where said connection portions of said conductive elements are mechanically forced to be positioned in contact with said first or said second connection bar, or *busbar,* and each contact portion to be arranged in contact with a respective positive terminal, or with a respective negative terminal, of said plurality of cells, in such a way to provide the electrical connection between said first and said second connection bar, or *busbar,* and said plurality of cells;
that at least one support body of the aforementioned plurality is provided with a cavity arranged to house, in use, a respective contact portion of said conductive element;
and that at each said cavity an elastic element made of an elastomeric material is provided arranged to resiliently force the respective contact portion towards the positive or the negative terminal of the respective cell along a direction axial to said cell, in such a way to guarantee the aforementioned electrical connection.

Other features of the invention and related embodiments are set out in the dependent claims.

Advantageously, the engagement group can comprise at least a support plate. In particular, the or each support plate and the first and second connection bars are configured to mechanically engage with each other. For example, the or each support plate can be adapted to mechanically engage with clearance, or carrying out a positive engagement, into an opening provided at each connection bar, or *busbar.*

More in particular, on the or each support plate at least one temperature sensor can be mounted that is configured to detect the temperature of at least a part of the aforementioned plurality of cells and to generate a corresponding temperature signal.

In addition, or alternatively, to the or each temperature sensor on the or each support plate, at least one adjustment member can be mounted configured to adjust the balancing current of said plurality of cells, or a part of this. More precisely, the management unit can be configured to operate the adjustment element of the balancing current, for example a resistance, in such a way to divert on it the energy of that section.

More in particular, in addition to the or each aforementioned temperature sensor, and/or the or each adjustment element of the balancing current, and on the or each support plate, at least one connector can be mounted configured to connect the or each temperature sensor and/or the or each adjustment element of the balancing current to said battery management unit or BMS. In this way, the battery management unit or BMS can receive the signal of temperature and/or the signal of voltage, in particular to process the same and to carry out the known operations of controlling of the temperature and of balancing of the cells, which are normally carried out by the prior art BMS. However, with respect to the BMS which are generally provided in the prior art battery packs, the technical solution according to the present invention of mounting the or each temperature sensor and/or the or each adjustment element of the balancing current on the support plate allows to considerably reduce the number of the components that are present on the BMS, thus considerably reducing its size and its cost. More precisely, the BMS does not have the electronic components which operate both the balance of the different groups of cells and the detection of the temperature. It is, therefore, a BMS "lightened" from the resistances, from the sensors of temperature and from the components which adjust the balance among the groups of cells. These resistances and the components are, in fact, relocated and positioned on the card of each battery module. The BMS maintains the functions of processing the temperature signals and the inlet voltage only, and provides the exiting balancing order as a response.

In particular, the aforementioned engagement group can comprise, furthermore, first engagement elements configured to removably mechanically engage the or each support plate to at least a part of the aforementioned plurality of support bodies.

Advantageously, the engagement group can comprise, furthermore, second engagement elements configured to removably mechanically engage at least one between the first and the second connection bar, or *busbar,* to the first and second support bodies.

In particular, a first support body and at least a second support body can be provided. More in particular, the engagement group can be configured to engage the first and the second support body to the same side of the same support plate.

In an embodiment foreseen by the invention, the aforementioned plurality of cells can be organized according to a first and a second row of cells.

In this case, the battery module can comprise, furthermore:
- a third support body provided with a third conductive element and positioned at the opposite side of the first support body with respect to the first connection bar, or *busbar;*
- a fourth support body provided with a fourth conductive element and positioned at the opposite side of the second support body with respect to said second connection bar, or *busbar.*

More in particular, the conductive elements of the third and the fourth support body can comprise a respective plurality of contact portions. In particular, each contact portion of the third support body is adapted to be arranged, in use, adjacent to a respective positive terminal of a respective cell of said plurality of cells, and each contact portion of the fourth support body is adapted to be arranged, in use, in contact with a respective negative terminal of the aforementioned plurality of cells.

In particular, in this case, the engagement group can be, furthermore, configured to removably mechanically engage, in the engagement configuration, with the third and fourth support bodies. In the working position, the third and fourth support bodies are adapted to force the third and fourth connection portions of the third and fourth conductive elements to be positioned in a respective connection position, where they are, respectively, positioned in contact with the first connection bar and with the second connection bar, or busbar, and the contact portions of the third and of the fourth plurality to be arranged in contact, respectively, with respective said positive terminals and respective negative terminals of the plurality of cells.

In particular, the aforementioned elastomeric material, or rubber, can be a thermoplastic elastomeric material.

In an embodiment foreseen by the invention, the elastic material is Styrene-ethylene-butylene-styrene (SEBS).

Advantageously, in use, each elastic element can be arranged to resiliently force the respective contact portion towards the positive or negative terminal of the respective cell, in such a way to guarantee the electrical connection among the components.

In particular, during the movement of the engagement group from the disengagement configuration to the engagement configuration, the or each elastic element is elastically pressed. In this way, on the one hand, the axial block is carried out of the cells of the battery module to the support bodies, and on the other hand, the necessary electrical connection among the cells same and the electric components of the battery module is guaranteed.

In a possible embodiment of the invention, the aforementioned first engagement elements can comprise:
- a plurality of engagement holes made in the or each support plate;
- a plurality of protruding portions, each of which adapted to protrude from each support body of the aforementioned plurality and configured to engage, in the aforementioned engagement configuration of the engagement group, in a respective engagement hole of the aforementioned plurality of engagement holes of the aforementioned support plate.

According to another aspect of the invention, a battery pack, according to the invention, comprises a first and at least a second battery module as described above.

In particular, the first battery module is positioned above the second battery module and the second connection bar, or *busbar,* of the first battery module coincides with the first connection bar, or *busbar,* of the second battery module.

More in particular, the aforementioned second connection bar, or *busbar,* of the first battery module can comprise:
- an upper connection portion configured to be electrically connected to said negative terminals of said plurality of cells of said first battery module; and
- a lower connection portion configured to be electrically connected to said positive terminals of said plurality of cells of said second battery module.

In particular, the aforementioned upper connection portion and the aforementioned lower connection portion of the second connection bar, or *busbar,* of the first battery module, are adapted to connect in series the first battery module and the second battery module.

Advantageously, the battery pack comprises, furthermore, a management unit or BMS configured to receive the temperature signals and/or the signals of voltage, if any, by the sensors of temperature and by the sensors of voltage, if present at the different battery modules which form the battery pack, and to activate the or each adjustment member to adjust the balancing current among the different cells in such a way to balance the voltage. Therefore, in practice the BMS unit is adapted to manage the charging and the discharging of the cells of the pack, in particular of each battery module which form the same, to avoid that predetermined threshold values can be exceeded.

According to a further aspect of the invention, a method for manufacturing a battery module comprises the steps of:
- positioning a plurality of cells according to at least a row, each cell of said plurality having a positive terminal and a negative terminal positioned at opposite ends;
- disposing of a first and a second connection bar, or *busbar,* positioned at opposite end portions of said battery module and configured to be respectively electrically connected to said positive terminals and to said negative terminals of said plurality of cells;
- disposing of a plurality of support bodies each of which comprising a respective plurality of housing portions configured to house, in use, a respective end portion comprising said positive terminal, or said negative terminal, of a respective cell of said plurality of cells, each support body of said plurality being provided with a respective conductive element made of a conductive material and comprising a respective plurality of contact portions and a respective connection portion, each contact portion of said plurality being adapted to be positioned, in use, adjacent to a respective positive terminal, or to a respective negative terminal of a respective cell of said plurality of cells;
- removably mechanically engaging said plurality of support bodies to mechanically force said connection portions of said conductive elements to be arranged in contact with said first connection bar, or with said second connection bar, or busbar, and each said contact portion to be arranged in contact, with a respective positive terminal or with a respective negative terminal of said plurality of cells, in such a way to carry out the electrical connection between said first and said second connection bar, or busbar, and said plurality of cells;
wherein said mechanical engagement is carried out by resiliently forcing by an elastic element made of an elastomeric material and which is housed within a cavity made in at least a support body of said plurality, a respective contact portion of said conductive element towards said positive or negative terminal of said respective cell along a direction axial to said cell, in such a way to guarantee the electric connection.

### Brief description of the drawings

The invention will be now illustrated with the following description of an exemplary embodiment thereof, exemplifying but not limitative, with reference to the attached drawings wherein:
- Fig. 1A diagrammatically shows a perspective side elevation view of a first embodiment of the battery module provided by the present invention in an engagement configuration;
- Fig. 1B diagrammatically shows a perspective side elevation view of a possible embodiment of a cell of which the battery module of figure 1A can be provided in working conditions;
- Fig. 2 diagrammatically shows a perspective side elevation view of the embodiment of the battery module of figure 1 in an exploded configuration;
- Fig. 3A diagrammatically shows a plan perspective view of a possible conductive element foreseen by the present invention for the battery module according to the invention;
- Fig. 3B diagrammatically shows a plan perspective view of a possible embodiment of a support body of which the battery module, according to the invention, is provided with the respective conductive element;
- Fig. 4A diagrammatically shows a perspective side elevation view of an alternative embodiment of the battery module of figure 1A foreseen by the present invention in an engagement configuration;
- Fig. 4B diagrammatically shows a perspective side elevation view of a possible embodiment of the connection bars, or *busbar,* which can be used in the alternative embodiment of figure 4A;

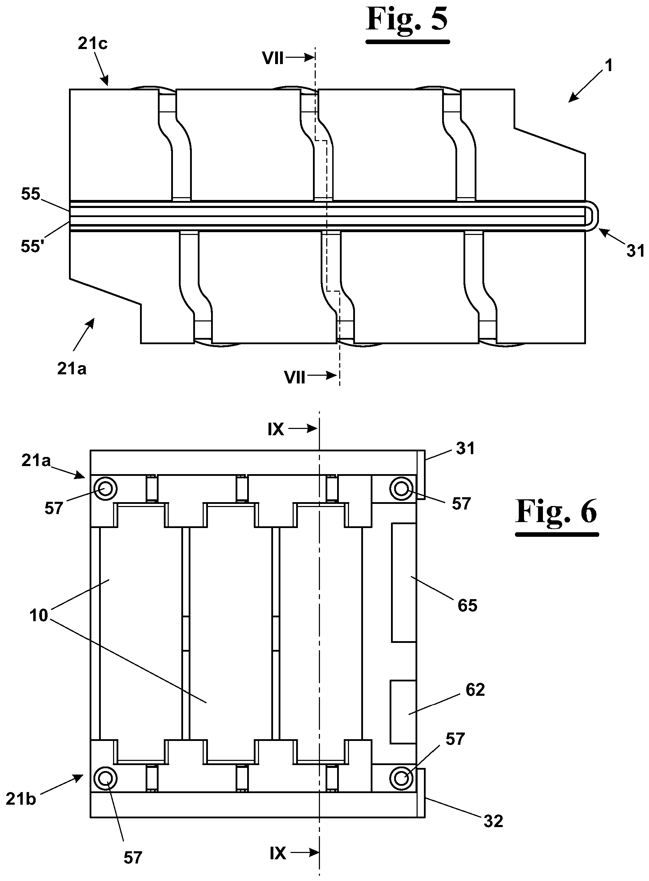

- Fig. 5 shows a plan view of the battery module of figure 4A;
- Fig. 6 shows a side elevation view of the battery module of figure 4A;
- Fig. 7 diagrammatically shows a cross section view according to the arrows VII-VII of the battery module of figure 5;
- Fig. 8 diagrammatically shows an enlargement of the figure 7 to highlight some technical characteristics;
- Fig. 9 diagrammatically shows a cross section view according to the arrows IX-IX of the battery module of figure 6
- Fig. 10 diagrammatically shows an enlargement of the figure 9 to highlight some technical characteristics;
- Fig. 11 diagrammatically shows a perspective side elevation view of a battery pack that can be obtained by assembling together more battery modules according to the invention;

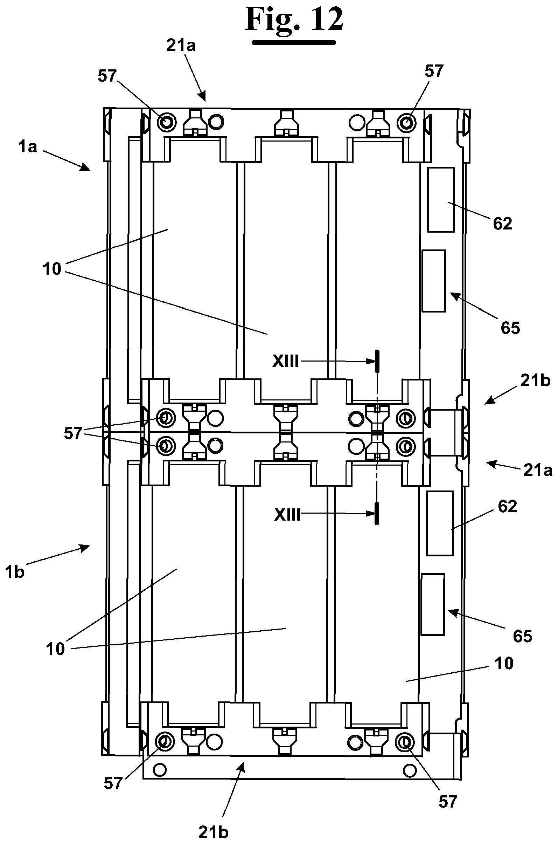

- Fig. 12 diagrammatically shows a side elevation view of an alternative embodiment of the battery pack of figure 11;
- Fig. 13 shows an enlargement of a cross section according to the arrows XIII-XIII of a part of the battery pack of figure 12;
- la figure 14 diagrammatically shows a perspective side elevation view of a possible alternative embodiment of the elastic element according to the invention;
- Fig. 15 diagrammatically shows a perspective side elevation view of an embodiment of a group of conductive elements associated to the same support body;
- Fig. 16 shows a perspective view of a possible embodiment of a support body according to the invention;
- Fig. 17 diagrammatically shows a perspective side elevation view of an embodiment of a battery module obtained by using the support body of figure 16;
- Fig. 18 diagrammatically shows a perspective side elevation view of an enlargement of a part of the figure 17 where a support body has been removed to show some technical characteristics of the elastic element and of the conductive elements that are used.

### Detailed description of some exemplary embodiments of the invention

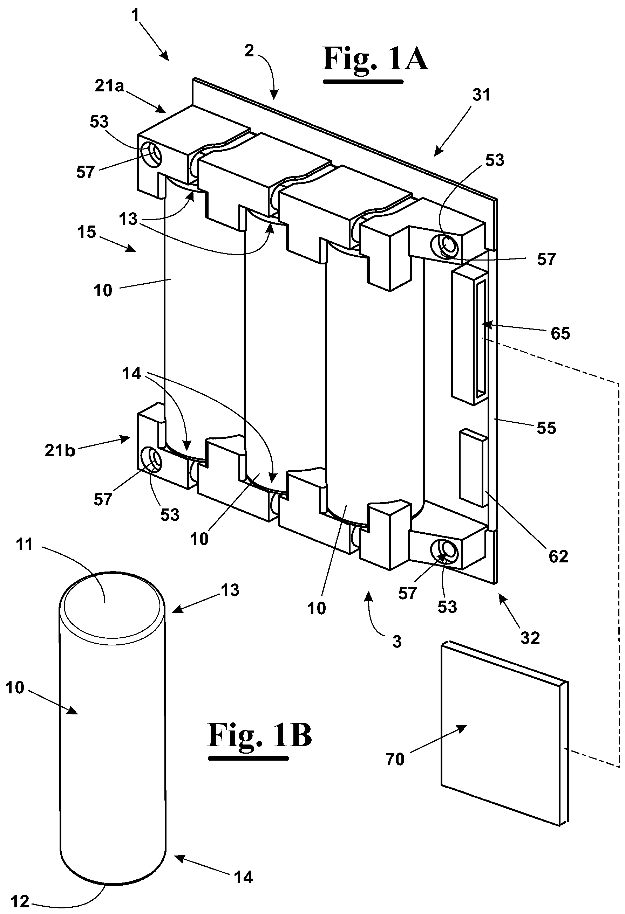

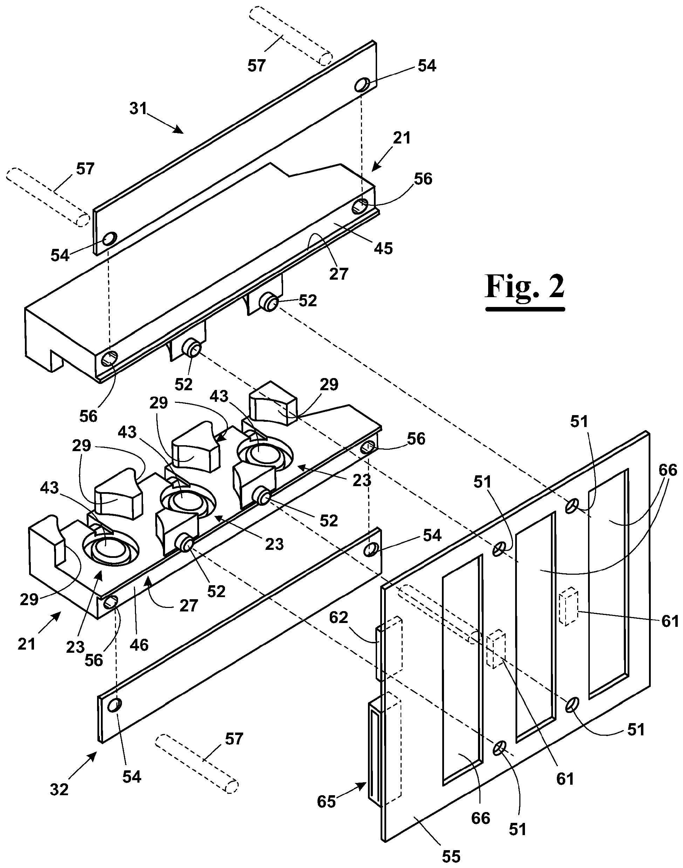

With reference to the figures 1A and 1B, a first embodiment of a battery module 1, according to the invention, comprises a plurality of cells 10, for example 3 cells 10 having a cylindrical geometry, arranged according to a predetermined number of rows 15, in the example of figures 1 and 2, according to a single row 15. In particular, the cells 10 of each row 15 are, advantageously, positioned vertically one next to the other.

Each cell 10 of the aforementioned plurality has a positive terminal 11 and a negative terminal 12 positioned at opposite ends 13 and 14, going along an axial direction 110. Even if in the figures 1A and 1B cells with a cylindrical geometry are shown, the present invention does not exclude that the same inventive concept can be also applied to cells 10 with a different geometry, for example cells 10 with prismatic geometry, case that is not shown in detail in the figures from 1A to 11 for simplicity, but of known type for a skilled person in the technical field.

The battery module 1 comprises, furthermore, a first connection bar 31, or *busbar,* positioned at a first end portion 2 of the battery module 1 and configured to be electrically connected to the different positive terminals 11 of the aforementioned plurality of cells 10, and a second connection bar 32, or *busbar,* positioned at a second end portions 3 of the battery module 1, in particular opposite to the first end portion 2 with respect to a transversal plane, and configured to be electrically connected to the negative terminals 12 of the cells 10, in such a way that is possible to connect in parallel the different cells 10 of the battery module 1.

The battery module 1 can provide, furthermore, a plurality of support bodies 21, for example a first and a second support body 21a and 21b, each of which comprising a respective plurality of housing portions, for example 3 housing portions 23 and 24. In particular, each support body 21 can be made of a plastic material, in particular a polymeric material, for example polyamide, in particular Nylon, advantageously Glass filled Nylon, material having a high structural resistance, or polybutylene-terephthalate (PBT), advantageously PBT GF20.

Each housing portion 23 is adapted to house, in use, a first end portion 13 comprising the positive terminal 11 of a respective cell 10 of the aforementioned plurality of cells, whilst each housing portion 24 is adapted ad house, in use, a second end portion 14 comprising the negative terminal 12 of a respective cell 10 of the plurality of cells. More precisely, each housing portion 23, or 24, can be laterally delimited by a determined number of containment walls 29, advantageously curvilinear in the case of cylindrical cells 10, in such a way to fit with the external surface of the cell 10 to be housed.

According to what is foreseen by the invention, each support body 21 is associated to a respective conductive element 41. Each conductive element 41 is made of a conductive material, for example copper, advantageously nickel-plated copper, and is configured to electrically connect the first, or the second connection bar 31, or 32, to the positive terminals 11, or to the negative terminals 12, of the plurality of cells 10. More in particular, each conductive element 41 comprises a respective plurality of contact portions, for example 3 contact portions 43. The contact portions 43 of a conductive element 41 are adapted to be positioned, in use, adjacent to the positive terminals 11, or to the negative terminals 12, of the cells 10. More precisely, the 3 contact portions 43 of the conductive element 41 of the first support body 21a can be arranged, in use, in contact with respective positive terminals 11 of respective cells 10, and the 3 contact portions 43 of the conductive element 41 of the second support body 21b can be positioned, in use, in contact with respective negative terminals 12 of respective cells 10, in such a way to be in electrical contact with the same.

More precisely, each contact portion 43 of the conductive element 41 of the first support body 21a and each contact portion 43 of the conductive element 41 of the second support body 21b, is positioned, in use, at a respective housing portion 23 of the respective support body 21a-21b.

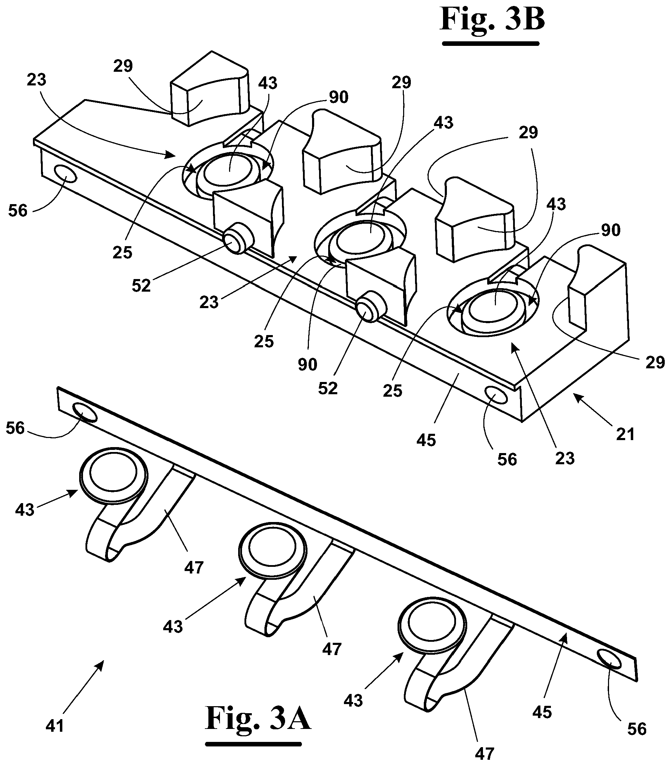

As shown in detail in figure 3A, the conductive element 41 of the first and the second support body 21a and 21b comprises, furthermore, a respective connection portion 45. More precisely, each connection portion 45 can be substantially laminar shaped, and can be adapted to be positioned, in use, in contact with a respective connection bar, or *busbar,* 31 and 32.

More in detail, the battery module 1, according to the invention, is provided with an engagement group 51, 52, 53, 54, 55, 56 and 57 configured to move between a disengagement configuration, where the support bodies, for example in the case of the embodiment of figures 1 and 2, the first and the second support body 21a and 21b, are not engaged to each other, and an engagement configuration where the engagement group 51, 52, 53, 54, 55, 56 and 57 removably mechanically engage the support bodies 21, for example the first and the second support body 21a and 21b, in a predetermined working position. More precisely, at the aforementioned working position, the engagement group forces the connection portions 45 of the conductive elements 41 of the first and the second support body 21a and 21b to be arranged in contact con the first connection bar 31 and con the second connection bar 32, or *busbar.*

In particular, the second engagement elements can comprise at least a first hole 54 made in at least one between the first and the second connection bar, or busbar 31 and 32 and at least a respective second hole 53 made in at least one of the aforementioned support bodies 21a-21d. More in particular, in the aforementioned engagement configuration, the first and second holes 53 and 54 are aligned and reciprocally engaged to each other by a respective tightening element 57.

Advantageously, the engagement group, when is arranged in the aforementioned engagement configuration, is also able to mechanically force the contact portions 43 to be arranged in contact with respective positive terminals 11 or negative terminals 12 of the aforementioned plurality of cells 10. In this way, an electrical connection among the first and the second connection bar, or *busbar,* 31 and 32, and the aforementioned plurality of cells 10 is carried out and, therefore, the connection in parallel of these latter with no need to provide any welding among the components, as, instead, is necessary in the prior art battery modules. Therefore, the battery module 1, according to the invention, unlike analogous prior art products, can be easily and completely disassembled in a non-destructive way, and allows to inspect the different parts which form the same, and, in case, to provide a replacement of the same, and, therefore, to quickly and easily assemble them together again, once that the ordinary or extraordinary maintenance operation is finished.

In particular, the battery module 1, according to the invention, comprises at least a temperature sensor 61 to detect the temperature at a determined detection zone of the battery module 1, in such a way to detect the temperature of a determined number of cells 10, or of all the cells 10 of the aforementioned plurality, and to generate a corresponding temperature signal. Furthermore, at least an adjustment element of the balancing current 62, for example a resistance, is provided. More precisely, when the system detects that a cell, or a group of cells, has reached a predetermined maximum value of the voltage, the energy of that section is "diverted" towards the adjustment element of the balancing current, for example the resistance.

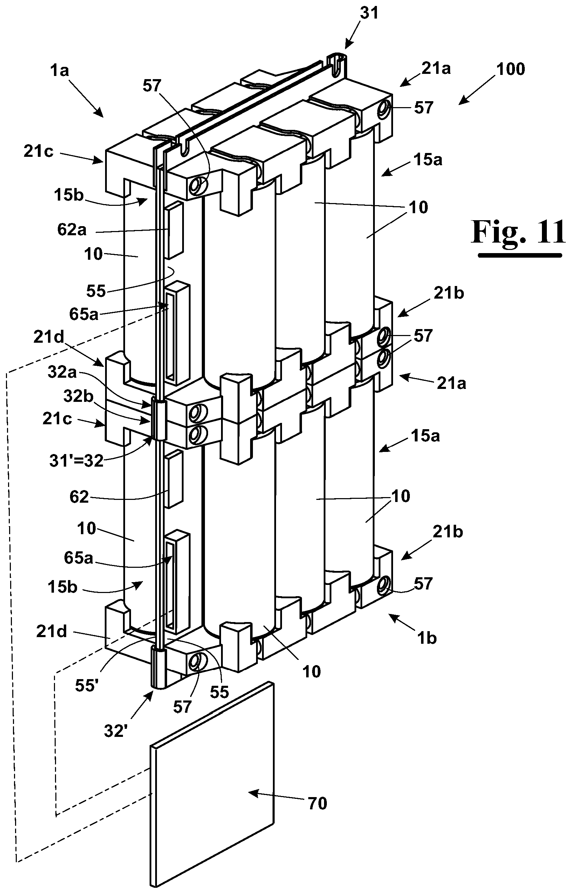

The aforementioned signal of temperature is, then, sent by the or each temperature sensor 61 to an external BMS unit 70 (see figure 11) which provides to elaborate the same. More precisely, the or each temperature sensor 61 and the or each adjustment element of the balancing current 62 are, advantageously, connected to the battery management unit 70 through at least one connector 65 which provides to connect the others by a wired connection.

In a preferred embodiment of the invention, the aforementioned engagement group comprises at least a support plate 55 and first engagement elements 51, 52 configured to removably mechanically engage the or each support plate 55 to the plurality of support bodies 21, for example to the first and to the second support body 21a and 21b, in particular at the same side of the plate 55. In particular, the first engagement elements 51 and 52 can provide at least an engagement hole 51 made at the support plate 55, as diagrammatically shown for example in figure 2, or, alternatively, at the support bodies 21, and at least a protruding portion 52, for example 2 engagement pins 52, configured to protrude, in particular along a direction transversal to the or each plate 55, and to engage in respective engagement holes 51 made at the support plate 55, or alternatively at the support bodies. More precisely, the aforementioned protruding portions 52, preferably integral to the respective support body 21a-21d, are adapted to carry out a centering action of the different components of the battery module 1 in such a way to guarantee that they are correctly positioned one with respect to the other.

Preferably, the engagement group can comprise, furthermore, second engagement elements 53 and 54 adapted to removably and in a way that can be dismantled mechanically engage the first and second connection bars 31 and 32 to a respective support body 21. For example, both the connection bars 31 and 32 and the support bodies 21, and the aforementioned connection portions 45 can be provided with respective holes 53, 54 and 56 which, in the aforementioned working position, are coaxially arranged or, however, superimposed to each other and wherein tightening elements 57 which are diagrammatically shown in figure 2 can be provided, for example 4 bolts, or studs, each of which adapted to be engaged at the aforementioned holes 53, 54 and 56 aligned to each other to tighten among them the connection bars 31 and 32, the aforementioned support bodies 21, and the respective conductive elements 41. Therefore, once that the different components of the battery module 1 are positioned in a correct relative position owing to the presence of the aforementioned protruding portions 52, it is possible to tighten all of them in the aforementioned relative position by the tightening elements 57.

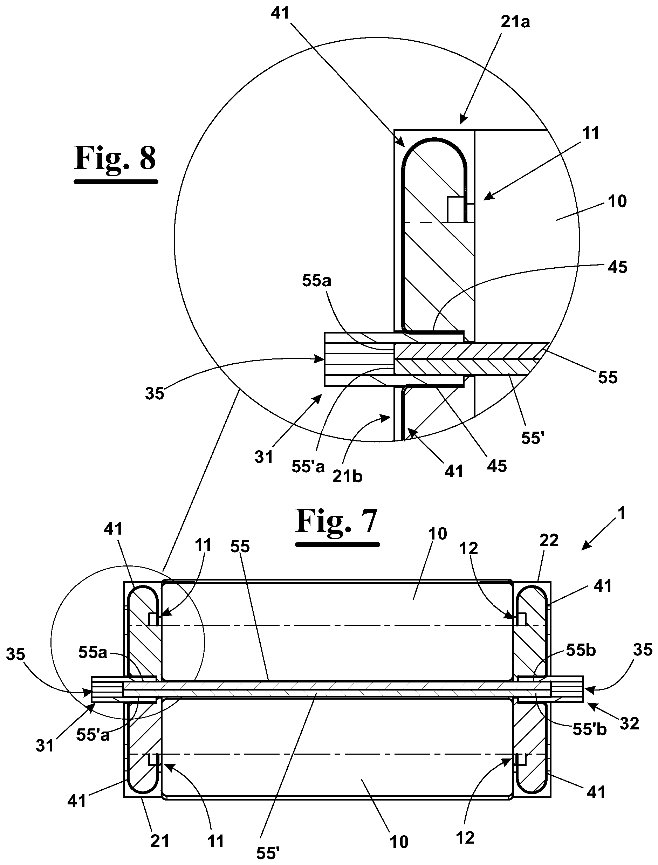

More precisely, as shown in detail in figure 8, the or each support plate 55 and 55', and the first and the second connection bar, or *busbar,* 31 and 32 can be configured to partly superimposed to each other, for example at opposite end portions 55a, 55b and 55'a and 55'b, of the support plate 55 and 55', in such a way to carry out a mechanical engagement of the same. As shown for example in figure 2, at the face that will be positioned in contact with the connection bar 31, or 32, the support body 21 can be provided with a "step" 27 or protruding portion on which the connection bar can be arranged abutted. In this way, it is guaranteed that the connection bar 31, or 32 is positioned in a correct working position.

For example, the opposite ends 55a, 55b of the or each support plate 55 and 55', can be adapted to engage with a determined clearance, or making a positive engagement, at a passageway 35 of which each connection bar, or *busbar,* 31 and 32 is provided. In view of the above, the engagement group 51-57 allows to make a firm and steady mechanical connection among the connection bars 31 and 32, the support bodies 21 and the or each support plate 55, 55', of which, in particular, the support plate 55 is an element of mechanical connection among the support bodies, for example between the first and the second support body 21a and 21b.

The or each support plate 55, 55' can be provided with one or more elongated apertures 66, or grooves, in particular longitudinal, configured to house, in use, a portion of a respective cell 10 of the aforementioned plurality, in particular for reducing the transversal whole encumbrance of the battery module 1, according to the invention.

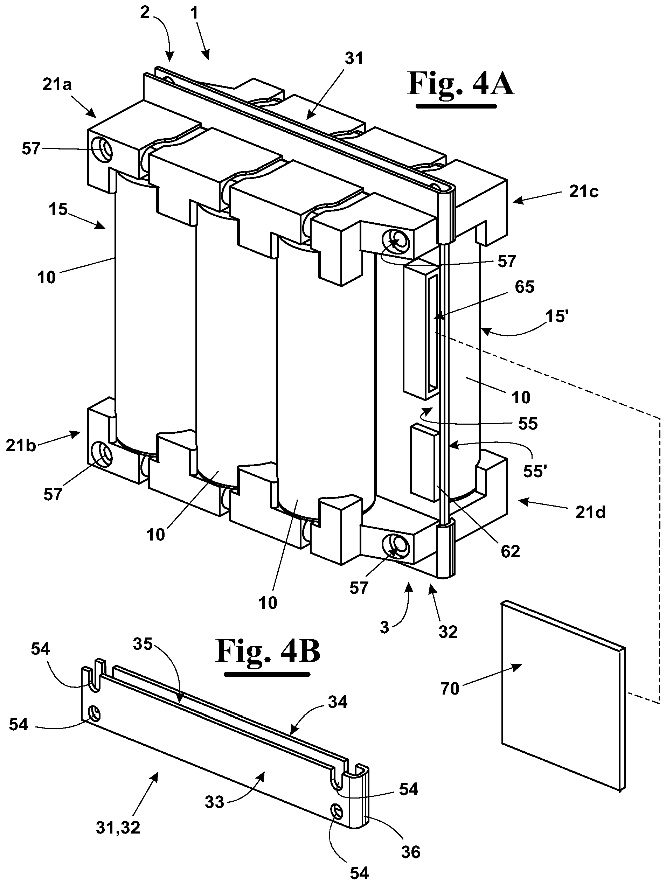

In the embodiments that are diagrammatically shown in the figures from 4A to 10, the plurality of cells 10 of the battery module 1 comprises a first and a second row 15a and 15b of cells 10, in particular parallel to each other. In this case, the first and second connection bars, or *busbars,* 31 and 32, will, advantageously, have a geometry such to electrically connect among them, respectively, all the positive terminals 11 of the first and of the second row 15a and 15b of cells 10 and the negative terminals 12, for example having a substantially "U-shaped" longitudinal cross section. More precisely, as it is shown in detail in figure 4B, the connection bars 31 and 32 have, preferably, a first and a second thin plate portion 33 and 34 superimposed and connected to each other at a respective end by a linking portion 36. More precisely between the first and the second thin plate portion 33 and 34 a passageway 35 is formed.

In this case, the battery module 1, in addition to the first and the second support body 21a and 21b, comprises a third support body 21c positioned at the opposite side of the first support body 21a with respect to the first connection bar 31, or *busbar* and a fourth support body 21d positioned at the opposite side of the second support body 21b with respect to the second connection bar 32. More precisely, the support body 21c comprises a third plurality of housing portions 23, for example 3 housing portions 23, each of which configured to house, in use, a first end portion 13 comprising the positive terminal 11 of a respective cell 10 of the second row 15b of the aforementioned plurality of cells 10. Analogously, the fourth support body 21d comprises a fourth plurality of housing portions 23, for example 3 housing portions 23. Each housing portion 23 housed, in use, a second end portion 14 comprising the negative terminal 12 of a respective cell 10 of the aforementioned second row 15b of the plurality of cells. According to what is foreseen by the invention, between the first and the second body 21a and 21b a predetermined number of cells 10 can be housed. This number can be equal or less than the number of cells 10 which can be housed between the third and the fourth support body 21c and 21d, if present in the battery module 1.

More in detail, the third and the fourth support body 21c and 21d comprise a respective conductive element 41 also this made of a conductive material. In particular, the conductive element 41 of the third support body 21c comprises a respective plurality of contact portions 43, for example 3 contact portions 43, each of which arranged, in use, adjacent to a respective positive terminal 11 of a respective cell 10 of the second row 15b of the aforementioned plurality of cells 10, whilst the conductive element 41 of the fourth support body 21d will be provided with a same number of contact portions 43, for example 3 contact portions 43, but each of these will be arranged, in use, in contact with a respective negative terminal 12 of a respective cell of the aforementioned second row 15b of the plurality of cells 10.

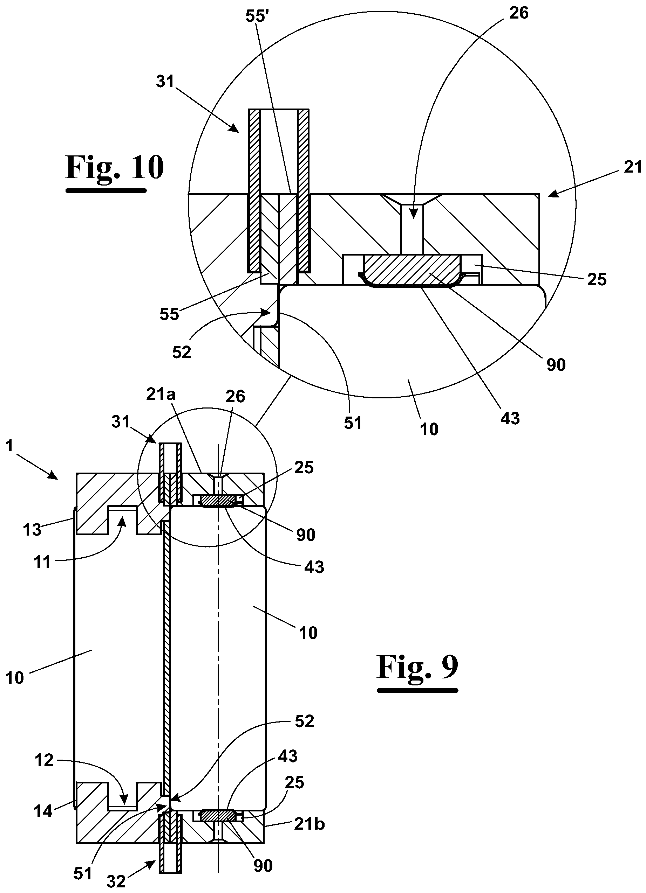

As shown in detail in particular in the figures 9 and 10, at least a support body among the aforementioned plurality of support bodies 21a-21d can be provided with a cavity 25 atta ad house a respective contact portion 43 of the respective conductive element 41. In particular, at each cavity 25 an elastic element 90 can be provided. This can be made of a material having a controlled pliability, for example made of synthetic rubber, or an elastomeric material, and be arranged to resiliently force the respective contact portion 43 towards the positive terminal 11, or the negative terminal 12, of the respective cell 10, along a push direction 110 axial to the cell 10, in such a way to guarantee the electrical connection among these components.

In particular, as for example diagrammatically shown in the figures 3A and 3B, the plurality of contact portions 43 adapted to be positioned at the same support body 21, can be connected by a plurality of secondary connection portions 47 to the same connection portion 45. More in particular, each secondary connection portion 47 can be a shaped elongated element, for example bent.

In particular, each secondary connection portion 47 can be configured in such a way to be pliable, or substantially pliable, in a controlled way with respect to the aforementioned connection portion 45.

In a possible embodiment foreseen by the invention and still diagrammatically shown in the figures 9 and 10, each support body 21a-21d can be provided with one or more apertures 26, for example branched to provide an elastic element 90 with more branches as described below with reference to the figures from 14 to 18, each of which adapted to put in communication the external environment with the aforementioned cavity 25. In this way, according to one of the possible technological solutions foreseen by the invention, it is possible, once positioned, to inject the elastomeric material at the melted state into the aforementioned cavity 25 through the aforementioned apertures 26, and, therefore, anchoring the aforementioned elastic elements 90 to the respective support body 21, in particular through a co-molding process. Then, each conductive element 41 is positioned in a respective working position with respect to the respective support body 21a-21d to which is advantageously constrained, in particular by a positive engagement, with the respective contact portions 43 positioned adjacent to the respective elastic elements 90.

In particular, during the movement of the engagement group from the disengagement configuration to the engagement configuration, each elastic element 90 can be arranged in an elastically compressed configuration. More precisely, at the moment of engaging the different components by the engagement group, in particular at the moment of engaging the support bodies to the or each support plate 55, 55', by the aforementioned first engagement elements, the presence of the elastic elements 90, gives the possibility to have a certain clearance to easily position the cells 10 among the aforementioned support bodies 21a-21d per poi, once the first engagement elements 51 and 52 have been arranged in the engagement configuration, exert an elastic force pushing the respective contact portion 41 towards the respective positive or negative terminal 11, 12, guaranteeing in this way the correct electrical contact among the same. Then, the second engagement elements 53 and 54, until that moment arranged for example in a respective reference position, but not yet tightened, can be tightened in order to further guarantee a firm anchoring of the different parts which form the battery module 1. As diagrammatically shown in figure 4B the second engagement elements 54 can comprise at least a hole 54 made in at least one between the first and the second connection bar, or busbar 31, 32.

In particular, if 2 plates 55 and 55' are provided, each of which associated to a respective row 15a, or 15b, of the cells 10, these can be arranged facing with each other, advantageously adjacent to respective surfaces. In this case, at least one of the two plates 55 and 55', at the face opposite to the face adjacent to the other plate 55', 55, is, advantageously, provided with the or each temperature sensor 61, and/or the or each balancing element 62, and/or the connector 65. In an alternative embodiment of the invention, each support plate 55 and 55' is, advantageously, provided with at least a respective temperature sensor 61, and/or with at least a respective balancing element 62, and/or with at least a respective connector 65. In a possible embodiment a first support plate 55 can be provided with one or more of the aforementioned sensors, or balancing elements, and the second plate 55' can be provided with sensors and electronic elements in general of different type, in particular an electronic element of the type that is present at the present time in the BMS unit of known type. In this way, it is possible to "lighten" and further simplify the BMS unit. Advantageously, between the first and the second plate 55 and 55' a conductor of power, which is not shown in the figures for simplicity, can be present.

Furthermore, in the case of a first and a second support plate 55 and 55' opposite to each other, each plate can be provided with respective engagement elements to engage each support plate to at least a respective support body 21, preferably to a couple of support bodies. More precisely, the support plate 55 can be engaged by the aforementioned support elements, to the first and to the second support body 21a and 21b, and the second support plate 55' to the third and to the fourth support body 21c and 21d (see figure 4A).

According to a further aspect of the present invention that is diagrammatically shown in figure 11, a battery pack 100 comprises at least a first and a second battery module 1a and 1b, for example as described above with reference to the embodiments shown in the figures from 4A to 10. In particular, the battery pack 100 provides that the first battery module 1a comprising a first and a second row 15a and 15b of cells 10, in particular of cylindrical type, is positioned above the second battery module 1b, also this comprising a first and a second row 15a and 15b of cells 10, advantageously of cylindrical type. The battery modules 1a and 1b provide, preferably, respectively a first and a second plate 55 and 55' as described above with reference to figure 4A. Each battery module 1a and 1b, furthermore, provides 4 support bodies 21a-21d, each of which, advantageously, engaged to a respective support plate 55, or 55' of the respective module 1a, or 1b, as described above with reference to the figures from 4A to 10.

According to what is foreseen by the invention, the second connection bar 32 of the first battery module 1a coincides, in this case, with the first connection bar 31' of the second module 1b. More precisely, the second connection bar 32 of the first battery module 1a comprises an upper connection portion 32a adapted to be connected to the negative terminals 12 of the first battery module 1a and a lower connection portion 32b configured to be connected to the aforementioned plurality of positive terminals 11 of the second battery module 1b. In this way, it is possible to connect the cells 10 of each battery module 1a, and 1b in parallel to each other, and to connect the cells 10 of the first battery module 1a in series with the cells 10 of the second battery module 1b. In this case, the second connection bar 32 of the first battery module 1a can be provided with a first couple of holes 54 to mechanically connect the same to at least a support body 21b of the first module 1a and to a second couple of holes 54 to connect, instead, mechanically, the second connection bar 32 of the first module 1a to at least a support body 21'a of the second module 1b.

The battery pack 100, according to the present invention, provides, furthermore, a battery management unit 70, or BMS from the English acronyms *"Battery Management System",* which is diagrammatically shown in figure 11. This, as it is known, has the function of controlling the correct functioning of the cells 10 of the battery pack 100 and, in particular, to redistribute the charge among the single groups of cells, each of which comprising a predetermined number of cells, if the voltage of one group of cells exceeds of a predetermined value the voltage of the other cells 10 of the battery pack 100, or of the respective battery module 1a, or 1b. According to the number of battery modules 1 connected in series as described above with reference to figure 11, will be possible, therefore, to obtain the desired total voltage of the battery pack 100.

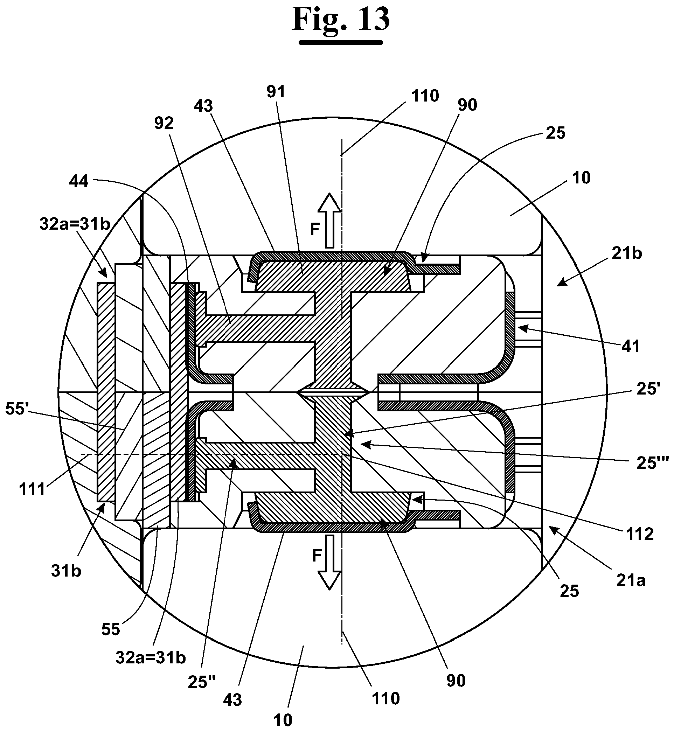

As diagrammatically shown in figure 13, the elastic element 90 can comprise a first push portion 91 arranged to elastically push the contact portion 43 of the conductive element 41 against the terminal 11, or 12, of the respective cell 10 along an axial direction 110, and a second push portion 92, or lateral branch, arranged to elastically push a supplementary contact portion 44 of the conductive element 41 against the connection bar 31, or 32, and, therefore, to force this against the first and the second support plate 55 and 55' guaranteeing the electrical contact among the different components.

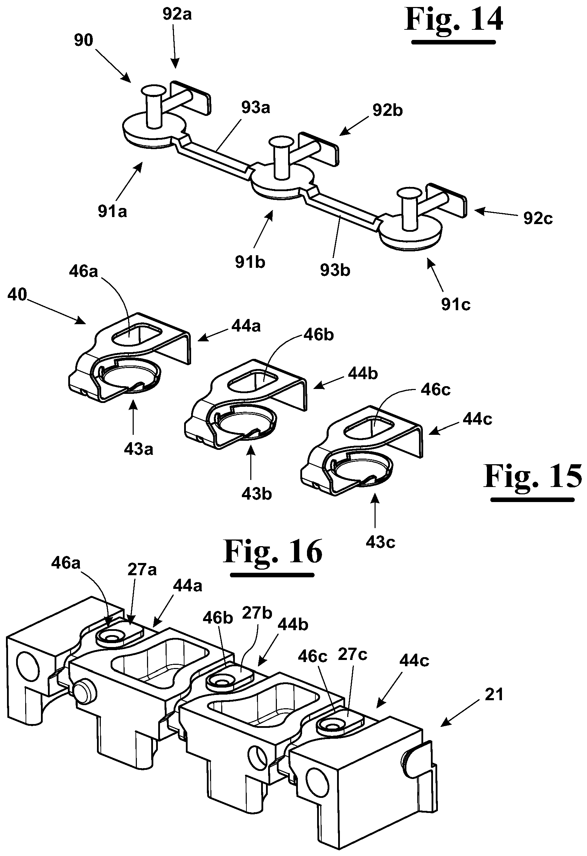

As diagrammatically shown in figure 15, the conductive element 41 associated to each support body 21a-21d can comprise a plurality, for example 3 contact portions 43a-43c made of a conductive material that are not physically connected to each other. In this case, therefore, a contact group 40 of contact portions 43 for each support body 21a-21d is provided. In particular, the elastic element 90 can comprise a single element made of an elastomeric material comprising a respective plurality, for example 3 prime push portions 91a-91c arranged to resiliently force a respective first contact portion 43a-43c of the conductive element 41 against a respective positive or negative terminal 11 or 12 of a respective cell 10, and a plurality of second push portions, for example 3 second push portions 92a-92c arranged to resiliently force a respective second contact portion 44a-44c against the first, or the second, connection bar or *busbar* 31, or 32, in particular along a push direction 111, inclined at a predetermined angle, or orthogonal, or substantially orthogonal, with respect to the aforementioned axial direction 110.

In particular, analogously to what described above with reference to the figures from 1 to, each support body 21a-21d can be provided with at least an aperture 26, not shown in figure 16, through which the elastomeric material at the melted state can be introduced into the aforementioned cavity 25, which, in the case that is shown in the figures from 13 to 18 has a main branch 25' oriented along a first direction, coincident with the aforementioned axial direction 110, and at least a secondary branch 25" oriented along a second direction 111 inclined, or orthogonal, with respect to the aforementioned first direction 110. In this way, during the step of overmolding or co-molding, both the or each first push portion 91a-91c, and the or each second push portion 92a-92c of the elastic element 90, diagrammatically shown in the figures 13 and 14, are obtained.

As diagrammatically shown in the figures from 13 to 18, each contact portion 43a-43c can be provided with a respective aperture 46a-46c through which, once that the overmolding of the elastic element 90 on the support body 21 is carried out, it is possible to mechanically engage each conductive element 41 al support body 21. In particular, as diagrammatically shown in figure 16, each aperture 46a-46c can be adapted to engage a respective engagement portion 27a-27c of the support body 21.

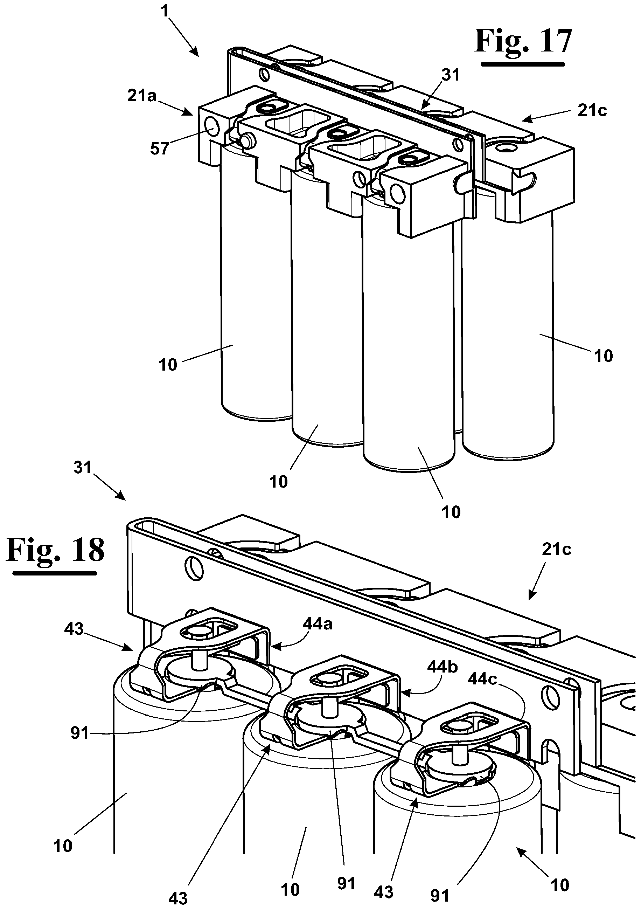

What described above is diagrammatically shown in figure 18 where the support body 21a has been removed in order to highlight some technical characteristics of the embodiments described above of the conductive element 41 and of the elastic element 90. This latter, as diagrammatically shown in figure 14 can comprise a plurality of elastic connection portions, for example 2 elastic connection portions 93a and 93b, each of which adapt to connect two following push portions, respectively the push portion 91a with the push portion 91b, and this latter with the push portion 91c. In particular, each connection portion 93a, 93b is formed during the overmolding or co-molding process at a supplementary portion 25‴ of the cavity 25, for example oriented along a direction 112 orthogonal to the first and to the second direction 110 and 111 and, therefore, entering the sheet of figure 13, provided in at least one support body 21a-21d.

The use of an elastomeric material, in particular of known hardness, in all the embodiments described above and diagrammatically shown in the figures from 1 to 18, guarantees to exert a known and constant force F on the surface of the terminal 11, or 12 of the cell 10, and in particular along a direction 110 axial to the cell 10. This allows to overcome the limits of the prior art solutions, for example of US2021083248, in particular the non-repeatability of the force of contact carried out by the only metallic thin plate, due to the geometric tolerances of production (shearing).

In particular, still as diagrammatically shown in figure 13, the technical solution of the present invention allows to push the contact portion 43 made of the conductive material, in particular the conductive thin-plate, for example made of nickel-plated copper, along the aforementioned axial direction 110, in particular with respect to the surface of contact with the cell 10 same. This solution allows, therefore, to avoid the disadvantages of the prior art solutions and in particular of the solution described in US2021083248.

The foregoing description of a specific embodiment will so fully reveal the invention according to the conceptual point of view, so that others, by applying current knowledge, will be able to modify and/or adapt for various applications such an embodiment without further research and without parting from the invention, according to the appended set of claims. It is to be understood that the phraseology or terminology employed herein is for the purpose of description and not of limitation.

## Claims

1. A battery module (1) comprising:
- a plurality of cells (10) arranged according to at least one row (15), each cell (10) of said plurality having a positive terminal (11) and a negative terminal (12) positioned at opposite ends of said cell (10);
- a first and a second busbar (31,32) positioned at end portions (2,3) of said battery module (1) opposite to each other and configured to be respectively electrically connected to said positive terminals (11) and to said negative terminals (12) of said plurality of cells (10);
- a plurality of support bodies (21a-21d) each of which comprising a respective plurality of housing portions (23) configured to house, in use, a respective end portion (13,14) comprising said positive terminal (11), or said negative terminal (12), of a respective cell (10) of said plurality of cells; wherein each support body (21a-21d) of said plurality is provided with a respective conductive element (41) made of a conductive material and comprising a respective plurality of contact portions (43), each contact portion (43) of said plurality being arranged, in use, adjacent to a respective positive terminal (11), or to a respective negative terminal (12) of a respective cell (10) of said plurality of cells (10), wherein each said conductive element (41) comprises, furthermore, a connection portion (45), and wherein at least a support body (21a-21d) of said plurality is provided with a cavity (25) arranged to house, in use, a respective contact portion (43) of said conductive element (41);
- an engagement group (51-57) is, furthermore, provided configured to move between a disengagement configuration, where said plurality of support bodies (21a-21d) are not engaged to each other, and an engagement configuration where said engagement group (51-57) is arranged to removably mechanically engage said plurality of support bodies (21a-21d) in a predetermined working position, where said connection portions (45) of said conductive elements (41) are mechanically forced to be arranged in contact with said first busbar (31) or with said second busbar (32) and each said contact portion (43) to be arranged in contact with a respective positive terminal (11) or with a respective negative terminal (12) of said plurality of cells (10), in such a way to make the electrical connection between said first and second busbars (31,32) and said plurality of cells (10);
said battery module (1) being **characterized in that** at each said cavity (25) an elastic element (90) is provided that is made of an elastomeric material and is arranged to resiliently force said respective contact portion (43) towards said positive or negative terminal (11,12) of said respective cell (10) along a direction (110) axial to said cell (10), in such a way to guarantee said electrical connection.

2. Battery module (1) according to claim 1, wherein said elastomeric material is a thermoplastic elastomeric material.

3. Battery module (1) according to claim 2, wherein said thermoplastic elastomeric material is Styrene-ethylene-butylene-styrene (SEBS).

4. Battery module (1) according to any previous claim, wherein said engagement group (51-57) comprises:
- at least a support plate (55,55');
- first engagement elements (51,52) configured to removably mechanically engage said or each support plate (55,55') to at least a support body of said plurality of support bodies (21a-21d);
- second engagement elements (53,54) configured to removably mechanically engage at least one between said first and said second busbar (31,32) to said plurality of support bodies (21a-21d), and wherein said second engagement elements (53,54) comprise at least one first hole (54) made in at least one between said first and second busbars (31,32), and at least a respective second hole (53) made in at least one of said support bodies (21a-21d), said first and second holes (53,54) being positioned aligned to each other in said engagement configuration and being reciprocally engaged to each other by a respective tightening element (57).

5. Battery module (1) according to claim 4, wherein a first support body (21a) and a second support body (21b) are provided and wherein said engagement group (51-57) is configured to engage said first and second support bodies (21a,21b) to the same side of the same support plate (55), and wherein said plurality of cells (10) comprises a first row of cells (15a) and a second row (15b) of cells, and wherein are, furthermore, provided:
- a third support body (21c) positioned at the opposite side of said first support body (21a) with respect to said first busbar (31);
- a fourth support body (21d) positioned at the opposite side of said second support body (21b) with respect to said second busbar (32).

6. Battery module (1) according to claim 4 or 5, wherein said first engagement elements (51,52) comprise:
- a plurality of engagement holes (51) made in said support plate (55), or in at least a part of said plurality of support bodies (21a-21d);
- a plurality of protruding portions (52) arranged to transversally protrude from said plurality of support bodies (21a-21d) and configured to engage, in said engagement configuration of said engagement group (51-57), in respective engagement holes (51) of said support plate (55).

7. Battery module (1) according to any claim from 4 to 6, wherein said plurality of cells (10) comprises a first and a second row (15a,15b) of cells (10), wherein said first and second busbars (31,32), comprise, respectively, a first and a second thin plate portion (33,34) superimposed and connected to each other at a respective end by a linking portion (36), wherein between said first and said second thin plate portion (33,34) a passageway (35) is formed and wherein said or each support plate (55) is arranged to be positioned at opposite end portions (55a,55b) in contact to said first and second busbars (31,32) at said respective passageways (35) to provide a mechanical coupling.

8. Battery module (1) according to any previous claim, wherein said first and second busbars (31, 32) have a substantially "U-shaped" longitudinal cross section.

9. Battery module (1) according to any previous claim, wherein each support body (21a-21d) is provided with a plurality of apertures (26), each of which adapted to put in communication the external environment with said cavity (25), said melted elastomeric material being adapted to be injected into said cavity (25) through said apertures (26) in such a way to anchor said elastic elements (90) to the respective support body (21a-21d).

10. Battery module (1) according to any claim from 4 to 9, wherein said or each support plate (55, 55') is provided with at least one elongated aperture (66), configured to house, in use, a portion of a respective cell (10) of said plurality, in such a way to reduce the total transversal dimension.

11. Battery module (1) according to any previous claim, wherein said plurality of contact portions (43) adapted to be positioned at the same support body (21a-21d), is connected by a plurality of secondary connection portions (47) to the same connection portion (45), and wherein each secondary connection portion (47) is configured in such a way to be pliable, or substantially pliable, in a controlled way with respect to said connection portion (45).

12. Battery module (1) according to any previous claim, wherein said conductive element (41) is made of nickel-plated copper.

13. Battery module (1) according to any previous claim, wherein each said elastic element (90) comprises at least a first push portion (91a-91c) arranged to elastically push said contact portion (43a-43c) of said conductive element (41) against said positive terminal (11) or said negative terminal (12) of a respective cell (10) along an axial direction (110), and at least a second push portion (92a-92c) arranged to elastically push a supplementary contact portion (44a-44c) of said conductive element (41) against said first busbar (31) or said second busbar (32), wherein said elastic element (90) comprises a plurality of elastic connection portions (93a, 93b), each of which arranged to connect two push portions (91a,91b,91c) to each other and wherein each support body (21a-21d) is provided with a cavity (25) having a plurality of branches (25',25"), each of which arranged to provide a respective first push portion (91a-91c), or a respective second push portion (92a-92c), or a respective connection portion (93a, 93b) of said elastic element (90) through an overmolding or co-molding process.

14. Battery pack (100) **characterised in that** it comprises a first and at least a second battery module (1a, 1b) according to any claim from 1 to 13, and a battery management unit, or BMS (70) configured to receive said temperature signals (61) and/or operate said or each adjustment member (62) to adjust the balancing current between said plurality of cells (10) **in that** said first battery module (1a) is positioned above said second battery module (1b) **in that** said second busbar (32) of said first battery module (1a) coincides with said first busbar of said second battery module (1b) and comprises:
- an upper connection portion (32a) configured to be electrically connected to said negative terminals (12) of said plurality of cells (10) of said first battery module (1a);
- a lower connection portion (32b) configured to be electrically connected to said positive terminals (11) of said plurality of cells (10) of said second battery module (1b);
**and in that** said upper connection portion (32a) and said lower connection portion (32b) are arranged to connect in series said plurality of cells (10) of said first battery module (1a) and said plurality of cells (10) of said second battery module (1b).

15. Method for manufacturing a battery module comprising the steps of:
- positioning a plurality of cells (10) according at least one row (15), each cell (10) of said plurality having a positive terminal (11) and a negative terminal (12) positioned at opposite ends;
- disposing of a first and a second busbar (31,32) positioned at end portions (2,3) of said battery module (1) opposite to each other and configured to be respectively electrically connected to said positive terminals (11) and to said negative terminals (12) of said plurality of cells (10);
- disposing of a plurality of support bodies (21a-21d) each of which comprising a respective plurality of housing portions (23) configured to house, in use, a respective end portion (13,14) comprising said positive terminal (11), or said negative terminal (12), of a respective cell (10) of said plurality of cells, each support body of said plurality being provided with a respective conductive element (41) made of a conductive material and comprising a respective plurality of contact portions (43) and a respective connection portion (45), each contact portion (43) of said plurality being adapted to be positioned, in use, adjacent to a respective positive terminal (11), or to a respective negative terminal (12) of a respective cell (10) of said plurality of cells (10);
- removably mechanical engaging of said plurality of support bodies (21a-21d) to mechanically force said connection portions (45) of said conductive elements (41) to be arranged in contact with said busbar (31), or with said second busbar (32), or busbar, and each said contact portion (43) to be arranged in contact, with a respective positive terminal (11) or with a respective negative terminal (12) of said plurality of cells (10), in such a way to make the electrical connection between said first and second busbars (31,32) and said plurality of cells (10); said method being **characterised in that** said removably mechanical engaging is carried out by resiliently forcing by an elastic element (90) made of an elastomeric material which is housed within a cavity (25) made in at least a support body (21a-21d) of said plurality, a respective contact portion (43) of said conductive element towards said positive or negative terminal (11,12) of said respective cell (10) along a direction (110) axial to said cell (10), in such a way to guarantee said electrical connection.

## Patentansprüche

1. Batteriemodul (1), umfassend:
- eine Vielzahl von Zellen (10), die gemäß mindestens einer Reihe (15) angeordnet ist, wobei jede Zelle (10) der Vielzahl einen positiven Anschluss (11) und einen negativen Anschluss (12) aufweist, die an gegenüberliegenden Enden der Zelle (10) positioniert sind;
- eine erste und eine zweite Sammelschiene (31, 32), die an Endabschnitten (2, 3) des Batteriemoduls (1) einander gegenüberliegend positioniert und dazu konfiguriert sind, jeweils elektrisch mit den positiven Anschlüssen (11) und mit den negativen Anschlüssen (12) der Vielzahl von Zellen (10) verbunden zu sein;
- eine Vielzahl von Stützkörpern (21a-21d), von denen jeder eine jeweilige Vielzahl von Gehäuseabschnitten (23) umfasst, die dazu konfiguriert ist, im Gebrauch einen jeweiligen Endabschnitt (13, 14) aufzunehmen, der den positiven Anschluss (11) oder den negativen Anschluss (12) einer jeweiligen Zelle (10) der Vielzahl von Zellen umfasst; wobei jeder Stützkörper (21a-21d) der Vielzahl mit einem jeweiligen leitfähigen Element (41), das aus einem leitfähigen Material gebildet ist und eine jeweilige Vielzahl von Kontaktabschnitten (43) umfasst, versehen ist, wobei jeder Kontaktabschnitt (43) der Vielzahl im Gebrauch benachbart zu einem jeweiligen positiven Anschluss (11) oder zu einem jeweiligen negativen Anschluss (12) einer jeweiligen Zelle (10) der Vielzahl von Zellen (10) angeordnet ist, wobei jedes leitfähige Element (41) ferner einen Verbindungsabschnitt (45) umfasst und wobei mindestens ein Stützkörper (21a-21d) der Vielzahl mit einem Hohlraum (25) versehen ist, der dazu angeordnet ist, im Gebrauch einen jeweiligen Kontaktabschnitt (43) des leitfähigen Elements (41) aufzunehmen;
- eine Eingriffsgruppe (51-57) ferner bereitgestellt ist, die dazu konfiguriert ist, sich zwischen einer Trennungskonfiguration, in der die Vielzahl von Stützkörpern (21a-21d) nicht miteinander in Eingriff steht, und einer Eingriffskonfiguration, in der die Eingriffsgruppe (51-57) so angeordnet ist, dass sie die Vielzahl von Stützkörpern (21a-21d) in einer vorbestimmten Arbeitsposition lösbar mechanisch in Eingriff nimmt, zu bewegen, wobei die Verbindungsabschnitte (45) der leitfähigen Elemente (41) mechanisch so mit Kraft beaufschlagt sind, dass sie in Kontakt mit der ersten Sammelschiene (31) oder mit der zweiten Sammelschiene (32) angeordnet sind und jeder Kontaktabschnitt (43) in Kontakt mit einem jeweiligen positiven Anschluss (11) oder mit einem jeweiligen negativen Anschluss (12) der Vielzahl von Zellen (10) angeordnet ist, sodass die elektrische Verbindung zwischen der ersten und der zweiten Sammelschiene (31, 32) und der Vielzahl von Zellen (10) gebildet wird;
wobei das Batteriemodul (1) **dadurch gekennzeichnet ist, dass** an jedem Hohlraum (25) ein elastisches Element (90) bereitgestellt ist, das aus einem elastomeren Material gebildet ist und dazu angeordnet ist, den jeweiligen Kontaktabschnitt (43) auf derartige Weise federnd zu dem positiven oder dem negativen Anschlusses (11, 12) der jeweiligen Zelle (10) entlang einer Richtung (110) axial zu der Zelle (10) mit Kraft zu beaufschlagen, dass die elektrische Verbindung gewährleistet wird.

2. Batteriemodul (1) gemäß Anspruch 1, wobei das elastomere Material ein thermoplastisches elastomeres Material ist.

3. Batteriemodul (1) gemäß Anspruch 2, wobei das thermoplastische elastomere Material Styrol-Ethylen-Butylen-Styrol (SEBS) ist.

4. Batteriemodul (1) gemäß einem vorhergehenden Anspruch, wobei die Eingriffsgruppe (51-57) Folgendes umfasst:
- mindestens eine Stützplatte (55, 55');
- erste Eingriffselemente (51, 52), die dazu konfiguriert sind, die oder jede Stützplatte (55, 55') lösbar mechanisch mit mindestens einem Stützkörper der Vielzahl von Stützkörpern (21a-21d) in Eingriff zu bringen;
- zweite Eingriffselemente (53, 54), die dazu konfiguriert sind, mindestens eine aus der ersten und der zweiten Sammelschiene (31, 32) mit der Vielzahl von Stützkörpern (21a-21d) lösbar mechanisch in Eingriff zu bringen, und wobei die zweiten Eingriffselemente (53, 54) mindestens ein erstes Loch (54), das in mindestens einer aus der ersten und der zweiten Sammelschiene (31, 32) gebildet ist, und mindestens ein jeweiliges zweites Loch (53), das in mindestens einem der Stützkörper (21a-21d) gebildet ist, umfassen, wobei das erste und das zweite Loch (53, 54) in der Eingriffskonfiguration aufeinander ausgerichtet positioniert sind und durch ein jeweiliges Anzugselement (57) wechselseitig miteinander in Eingriff gebracht werden.

5. Batteriemodul (1) gemäß Anspruch 4, wobei ein erster Stützkörper (21a) und ein zweiter Stützkörper (21b) bereitgestellt sind und wobei die Eingriffsgruppe (51-57) dazu konfiguriert ist, den ersten und den zweiten Stützkörper (21a, 21b) mit der gleichen Seite der gleichen Stützplatte (55) in Eingriff zu bringen, und wobei die Vielzahl von Zellen (10) eine erste Reihe von Zellen (15a) und eine zweite Reihe (15b) von Zellen umfasst, und wobei ferner Folgendes bereitgestellt ist:
- ein dritter Stützkörper (21c), der an der gegenüberliegenden Seite des ersten Stützkörpers (21a) in Bezug auf die erste Sammelschiene (31) positioniert ist;
- ein vierter Stützkörper (21d), der in Bezug auf die zweite Sammelschiene (32) an der gegenüberliegenden Seite des zweiten Stützkörpers (21b) positioniert ist.

6. Batteriemodul (1) gemäß Anspruch 4 oder 5, wobei die ersten Eingriffselemente (51, 52) Folgendes umfassen:
- eine Vielzahl von Eingriffslöchern (51), die in der Stützplatte (55) oder in mindestens einem Teil der Vielzahl von Stützkörpern (21a-21d) gebildet ist;
- eine Vielzahl von vorstehenden Abschnitten (52), die dazu angeordnet ist, quer von der Vielzahl von Stützkörpern (21a-21d) vorzustehen, und dazu konfiguriert ist, in der Eingriffskonfiguration der Eingriffsgruppe (51-57) in jeweilige Eingriffslöcher (51) der Stützplatte (55) einzugreifen.

7. Batteriemodul (1) gemäß einem der Ansprüche 4 bis 6, wobei die Vielzahl von Zellen (10) eine erste und eine zweite Reihe (15a, 15b) von Zellen (10) umfasst, wobei die erste und die zweite Sammelschiene (31, 32) jeweils einen ersten und einen zweiten dünnen Plattenabschnitt (33, 34) umfassen, die an einem jeweiligen Ende überlagert und durch einen Verknüpfungsabschnitt (36) miteinander verbunden sind, wobei zwischen dem ersten und dem zweiten dünnen Plattenabschnitt (33, 34) ein Durchgang (35) ausgebildet ist und wobei die oder jede Stützplatte (55) so angeordnet ist, dass sie an gegenüberliegenden Endabschnitten (55a, 55b) in Kontakt mit der ersten und der zweiten Sammelschiene (31, 32) an den jeweiligen Durchgängen (35) positioniert ist, um eine mechanische Kopplung bereitzustellen.

8. Batteriemodul (1) gemäß einem vorhergehenden Anspruch, wobei die erste und die zweite Sammelschiene (31, 32) einen im Wesentlichen "U-förmigen" Längsquerschnitt aufweisen.

9. Batteriemodul (1) gemäß einem vorhergehenden Anspruch, wobei jeder Stützkörper (21a-21d) mit einer Vielzahl von Öffnungen (26) versehen ist, von denen jede dazu ausgelegt ist, die äußere Umgebung mit dem Hohlraum (25) in Kommunikation zu bringen, wobei das geschmolzene elastomere Material dazu ausgelegt ist, auf eine solche Weise durch die Öffnungen (26) in den Hohlraum (25) eingespritzt zu werden, dass die elastischen Elemente (90) an dem jeweiligen Stützkörper (21a-21d) verankert werden.

10. Batteriemodul (1) gemäß einem der Ansprüche 4 bis 9, wobei die oder jede Stützplatte (55, 55') mit mindestens einer länglichen Öffnung (66) versehen ist, die dazu konfiguriert ist, im Gebrauch einen Abschnitt einer jeweiligen Zelle (10) der Vielzahl derart aufzunehmen, dass die gesamte Querabmessung reduziert wird.

11. Batteriemodul (1) gemäß einem vorhergehenden Anspruch, wobei die Vielzahl von Kontaktabschnitten (43), die dazu ausgelegt ist, an dem gleichen Stützkörper (21a-21d) positioniert zu sein, durch eine Vielzahl von sekundären Verbindungsabschnitten (47) mit dem gleichen Verbindungsabschnitt (45) verbunden ist und wobei jeder sekundäre Verbindungsabschnitt (47) derart konfiguriert ist, dass er in einer kontrollierten Weise in Bezug auf den Verbindungsabschnitt (45) biegbar oder im Wesentlichen biegbar ist.

12. Batteriemodul (1) gemäß einem vorhergehenden Anspruch, wobei das leitfähige Element (41) aus nickelplattiertem Kupfer gebildet ist.

13. Batteriemodul (1) gemäß einem vorhergehenden Anspruch, wobei jedes elastische Element (90) mindestens einen ersten Druckabschnitt (91a-91c), der angeordnet ist, um den Kontaktabschnitt (43a-43c) des leitfähigen Elements (41) elastisch gegen den positiven Anschluss (11) oder den negativen Anschluss (12) einer jeweiligen Zelle (10) entlang einer axialen Richtung (110) zu drücken, und mindestens einen zweiten Druckabschnitt (92a-92c), der angeordnet ist, um einen ergänzenden Kontaktabschnitt (44a-44c) des leitfähigen Elements (41) elastisch gegen die erste Sammelschiene (31) oder die zweite Sammelschiene (32) zu drücken, umfasst, wobei das elastische Element (90) eine Vielzahl von elastischen Verbindungsabschnitten (93a, 93b) umfasst, von denen jeder dazu angeordnet ist, zwei Druckabschnitte (91a, 91b, 91c) miteinander zu verbinden, und wobei jeder Stützkörper (21a-21d) mit einem Hohlraum (25) versehen ist, der eine Vielzahl von Verzweigungen (25', 25") aufweist, von denen jede dazu angeordnet ist, einen jeweiligen ersten Druckabschnitt (91a-91c) oder einen jeweiligen zweiten Druckabschnitt (92a-92c) oder einen jeweiligen Verbindungsabschnitt (93a, 93b) des elastischen Elements (90) durch einen Umspritzungs- oder Co-Molding-Vorgang bereitzustellen.

14. Batteriepack (100), **dadurch gekennzeichnet, dass** es ein erstes und mindestens ein zweites Batteriemodul (1a, 1b) gemäß einem der Ansprüche 1 bis 13 und eine Batteriemanagementeinheit oder BMS (70) umfasst, die zum Empfangen der Temperatursignale (61) und/oder zum Betätigen des oder jedes Einstellglieds (62) zum Einstellen des Ausgleichsstroms zwischen der Vielzahl von Zellen (10) konfiguriert ist, **dadurch, dass** das erste Batteriemodul (1a) über dem zweiten Batteriemodul (1b) positioniert ist, **dadurch, dass** die zweite Sammelschiene (32) des ersten Batteriemoduls (1a) mit der ersten Sammelschiene des zweiten Batteriemoduls (1b) zusammenfällt und Folgendes umfasst:
- einen oberen Verbindungsabschnitt (32a), der dazu konfiguriert ist, elektrisch mit den negativen Anschlüssen (12) der Vielzahl von Zellen (10) des ersten Batteriemoduls (1a) verbunden zu sein;
- einen unteren Verbindungsabschnitt (32b), der dazu konfiguriert ist, elektrisch mit den positiven Anschlüssen (11) der Vielzahl von Zellen (10) des zweiten Batteriemoduls (1b) verbunden zu sein;
**und dadurch, dass** der obere Verbindungsabschnitt (32a) und der untere Verbindungsabschnitt (32b) angeordnet sind, um die Vielzahl von Zellen (10) des ersten Batteriemoduls (1a) und die Vielzahl von Zellen (10) des zweiten Batteriemoduls (1b) in Reihe zu verbinden.

15. Verfahren zum Fertigen eines Batteriemoduls, umfassend die folgenden Schritte:
- Positionieren einer Vielzahl von Zellen (10) gemäß mindestens einer Reihe (15), wobei jede Zelle (10) der Vielzahl einen positiven Anschluss (11) und einen negativen Anschluss (12) aufweist, die an gegenüberliegenden Enden positioniert sind;
- Platzieren einer ersten und einer zweiten Sammelschiene (31, 32), die an Endabschnitten (2, 3) des Batteriemoduls (1) einander gegenüberliegend positioniert und dazu konfiguriert sind, jeweils elektrisch mit den positiven Anschlüssen (11) und mit den negativen Anschlüssen (12) der Vielzahl von Zellen (10) verbunden zu sein;
- Platzieren einer Vielzahl von Stützkörpern (21a-21d), von denen jeder eine jeweilige Vielzahl von Gehäuseabschnitten (23) umfasst, die dazu konfiguriert ist, im Gebrauch einen jeweiligen Endabschnitt (13, 14) aufzunehmen, der den positiven Anschluss (11) oder den negativen Anschluss (12) einer jeweiligen Zelle (10) der Vielzahl von Zellen umfasst, jeder Stützkörper der Vielzahl mit einem jeweiligen leitfähigen Element (41), das aus einem leitfähigen Material gebildet ist und eine jeweilige Vielzahl von Kontaktabschnitten (43) und einen jeweiligen Verbindungsabschnitt (45) umfasst, versehen ist, wobei jeder Kontaktabschnitt (43) der Vielzahl dazu ausgelegt ist, im Gebrauch benachbart zu einem jeweiligen positiven Anschluss (11) oder zu einem jeweiligen negativen Anschluss (12) einer jeweiligen Zelle (10) der Vielzahl von Zellen (10) positioniert zu sein;
- lösbares mechanisches Ineingriffnehmen der Vielzahl von Stützkörpern (21a-21d), sodass sie die Verbindungsabschnitte (45) der leitfähigen Elemente (41) mechanisch so mit Kraft beaufschlagen, dass sie in Kontakt mit der Sammelschiene (31) oder mit der zweiten Sammelschiene (32) oder der Sammelschiene angeordnet sind und jeder Kontaktabschnitt (43) in Kontakt mit einem jeweiligen positiven Anschluss (11) oder mit einem jeweiligen negativen Anschluss (12) der Vielzahl von Zellen (10) angeordnet ist, sodass die elektrische Verbindung zwischen der ersten und der zweiten Sammelschiene (31, 32) und der Vielzahl von Zellen (10) gebildet wird; wobei das Verfahren **dadurch gekennzeichnet ist, dass** das lösbare mechanische Ineingriffnehmen durch ein federndes Beaufschlagen mit Kraft durch ein elastisches Element (90), das aus einem elastomeren Material gebildet ist, das innerhalb eines Hohlraums (25) aufgenommen ist, der in mindestens einem Stützkörper (21a-21d) der Vielzahl gebildet ist, eines jeweiligen Kontaktabschnitts (43) des leitfähigen Elements zu dem positiven oder dem negativen Anschluss (11, 12) der jeweiligen Zelle (10) entlang einer Richtung (110) axial zu der Zelle (10) auf derartige Weise, dass die elektrische Verbindung gewährleistet wird, durchgeführt wird.

## Revendications

1. Module de batterie (1), comprenant :
- une pluralité de cellules (10) agencées selon au moins une rangée (15), chaque cellule (10) de ladite pluralité comportant une borne positive (11) et une borne négative (12) positionnées aux extrémités opposées de ladite cellule (10) ;
- une première et une seconde barres omnibus (31, 32) positionnées au niveau des parties d'extrémité (2, 3) dudit module de batterie (1) opposées l'une à l'autre et configurées pour être respectivement connectées électriquement auxdites bornes positives (11) et auxdites bornes négatives (12) de ladite pluralité de cellules (10) ;
- une pluralité de corps de support (21a à 21d) comprenant chacun une pluralité respective de parties de logement (23) configurées pour loger, lors de l'utilisation, une partie d'extrémité respective (13, 14) comprenant ladite borne positive (11), ou ladite borne négative (12), d'une cellule respective (10) de ladite pluralité de cellules ; dans lequel chaque corps de support (21a à 21d) de ladite pluralité est doté d'un élément conducteur respectif (41) fait d'un matériau conducteur et comprenant une pluralité respective de parties de contact (43), chaque partie de contact (43) de ladite pluralité étant agencée, lors de l'utilisation, de manière adjacente à une borne positive respective (11), ou à une borne négative respective (12) d'une cellule respective (10) de ladite pluralité de cellules (10), dans lequel chaque élément conducteur (41) comprend, en outre, une partie de connexion (45), et dans lequel au moins un corps de support (21a à 21d) de ladite pluralité est doté d'une cavité (25) agencée pour loger, lors de l'utilisation, une partie de contact respective (43) dudit élément conducteur (41) ;
- un groupe d'engagement (51 à 57) est, en outre, prévu configuré pour se déplacer entre une configuration de désengagement, dans laquelle ladite pluralité de corps de support (21a à 21d) ne sont pas engagés les uns avec les autres, et une configuration d'engagement dans laquelle ledit groupe d'engagement (51 à 57) est conçu pour engager mécaniquement de manière amovible ladite pluralité de corps de support (21a à 21d) dans une position de travail prédéterminée, dans laquelle lesdites parties de connexion (45) desdits éléments conducteurs (41) sont forcées mécaniquement pour être agencées en contact avec ladite première barre omnibus (31) ou avec ladite seconde barre omnibus (32) et chaque dite partie de contact (43) doit être agencée en contact avec une borne positive respective (11) ou avec une borne négative respective (12) de ladite pluralité de cellules (10), de manière à établir la connexion électrique entre lesdites première et seconde barres omnibus (31, 32) et ladite pluralité de cellules (10) ;
ledit module de batterie (1) étant **caractérisé en ce que** au niveau de chaque dite cavité (25), un élément élastique (90) est prévu qui est fait d'un matériau élastomère et est agencé pour forcer élastiquement ladite partie de contact respective (43) vers ladite borne positive ou négative (11, 12) de ladite cellule respective (10) dans une direction (110) axiale par rapport à ladite cellule (10), de manière à garantir ladite connexion électrique.

2. Module de batterie (1) selon la revendication 1, dans lequel ledit matériau élastomère est un matériau élastomère thermoplastique.

3. Module de batterie (1) selon la revendication 2, dans lequel ledit matériau élastomère thermoplastique est du styrène-éthylène-butylène-styrène (SEBS).

4. Module de batterie (1) selon l'une quelconque des revendications précédentes, dans lequel ledit groupe d'engagement (51 à 57) comprend :
- au moins une plaque de support (55, 55') ;
- des premiers éléments d'engagement (51, 52) conçus pour engager mécaniquement de manière amovible ladite ou chaque plaque de support (55, 55') avec au moins un corps de support de ladite pluralité de corps de support (21a à 21d) ;
- des seconds éléments d'engagement (53, 54) configurés pour engager mécaniquement de manière amovible au moins l'une entre ladite première et ladite seconde barres omnibus (31, 32) avec ladite pluralité de corps de support (21a à 21d), et dans lequel lesdits seconds éléments d'engagement (53, 54) comprennent au moins un premier trou (54) réalisé dans au moins l'une entre lesdites première et seconde barres omnibus (31, 32), et au moins un deuxième trou respectif (53) réalisé dans au moins l'un desdits corps de support (21a à 21d), lesdits premier et deuxième trous (53, 54) étant positionnés alignés l'un avec l'autre dans ladite configuration d'engagement et étant mutuellement engagés l'un avec l'autre par un élément de serrage respectif (57).

5. Module de batterie (1) selon la revendication 4, dans lequel un premier corps de support (21a) et un deuxième corps de support (21b) sont prévus et dans lequel ledit groupe d'engagement (51 à 57) est configuré pour engager lesdits premier et deuxième corps de support (21a, 21b) du même côté de la même plaque de support (55), et dans lequel ladite pluralité de cellules (10) comprend une première rangée de cellules (15a) et une seconde rangée (15b) de cellules, et dans lequel sont en outre prévus :
- un troisième corps de support (21c) positionné du côté opposé dudit premier corps de support (21a) par rapport à ladite première barre omnibus (31) ;
- un quatrième corps de support (21d) positionné du côté opposé dudit deuxième corps de support (21b) par rapport à ladite seconde barre omnibus (32).

6. Module de batterie (1) selon la revendication 4 ou 5, dans lequel lesdits premiers éléments d'engagement (51, 52) comprennent :
- une pluralité de trous d'engagement (51) réalisés dans ladite plaque de support (55), ou dans au moins une partie de ladite pluralité de corps de support (21a à 21d) ;
- une pluralité de parties en saillie (52) agencées pour faire saillie transversalement à partir de ladite pluralité de corps de support (21a à 21d) et configurées pour s'engager, dans ladite configuration d'engagement dudit groupe d'engagement (51 à 57), dans des trous d'engagement respectifs (51) de ladite plaque de support (55).

7. Module de batterie (1) selon l'une quelconque des revendications 4 à 6, dans lequel ladite pluralité de cellules (10) comprend une première et une seconde rangée (15a, 15b) de cellules (10), dans lequel lesdites première et seconde barres omnibus (31, 32) comprennent, respectivement, une première et une seconde parties de plaque mince (33, 34) superposées et connectées l'une à l'autre au niveau d'une extrémité respective par une partie de liaison (36), dans lequel entre ladite première et ladite seconde parties de plaque mince (33, 34) un passage (35) est formé et dans lequel ladite ou chaque plaque de support (55) est agencée pour être positionnée à des parties d'extrémité opposées (55a, 55b) en contact avec lesdites première et seconde barres omnibus (31, 32) au niveau desdits passages respectifs (35) pour fournir un couplage mécanique.

8. Module de batterie (1) selon l'une quelconquedes revendications précédentes,
dans lequel lesdites première et seconde barres omnibus (31, 32) comportent une section transversale longitudinale sensiblement en forme de « U ».

9. Module de batterie (1) selon l'une quelconque des revendications précédentes,
dans lequel chaque corps de support (21a à 21d) est doté d'une pluralité d'ouvertures (26), chacune étant adaptée pour mettre en communication l'environnement extérieur avec ladite cavité (25), ledit matériau élastomère fondu étant adapté pour être injecté dans ladite cavité (25) à travers lesdites ouvertures (26) de telle manière à ancrer lesdits éléments élastiques (90) au corps de support respectif (21a à 21d).

10. Module de batterie (1) selon l'une quelconque des revendications 4 à 9, dans lequel ladite ou chaque plaque de support *(55, 55')* est pourvue d'au moins une ouverture allongée (66), configurée pour loger, lors de l'utilisation, une partie d'une cellule respective (10) de ladite pluralité, de manière à réduire la dimension transversale totale.

11. Module de batterie (1) selon l'une quelconque des revendications précédentes, dans lequel ladite pluralité de parties de contact (43) adaptées pour être positionnées au niveau du même corps de support (21a à 21d), sont connectées par une pluralité de parties de connexion secondaires (47) à la même partie de connexion (45), et dans lequel chaque partie de connexion secondaire (47) est configurée de telle manière à être pliable, ou sensiblement pliable, de manière contrôlée par rapport à ladite partie de connexion (45).

12. Module de batterie (1) selon l'une quelconque des revendications précédentes, dans lequel ledit élément conducteur (41) est fait en cuivre nickelé.

13. Module de batterie (1) selon l'une quelconque des revendications précédentes,
dans lequel chaque dit élément élastique (90) comprend au moins une première partie de poussée (91a à 91c) agencée pour pousser élastiquement ladite partie de contact (43a à 43c) dudit élément conducteur (41) contre ladite borne positive (11) ou ladite borne négative (12) d'une cellule respective (10) le long d'une direction (110) axiale, et au moins une seconde partie de poussée (92a à 92c) agencée pour pousser élastiquement une partie de contact supplémentaire (44a à 44c) dudit élément conducteur (41) contre ladite première barre omnibus (31) ou ladite seconde barre omnibus (32), dans lequel ledit élément élastique (90) comprend une pluralité de parties de connexion élastiques (93a, 93b), chacune étant agencée pour connecter deux parties de poussée (91a, 91b, 91c) l'une à l'autre et dans lequel chaque corps de support (21a à 21d) est doté d'une cavité (25) comportant une pluralité de branches (25', 25"), chacune étant agencée pour fournir une première partie de poussée respective (91a à 91c), ou une seconde partie de poussée respective (92a à 92c), ou une partie de connexion respective (93a, 93b) dudit élément élastique (90) par un processus de surmoulage ou de co-moulage.

14. Bloc-batterie (100) **caractérisé en ce que** il comprend un premier et au moins un deuxième module de batterie (1a, 1b) selon l'une quelconque des revendications 1 à 13, et une unité de gestion de batterie, ou BMS (70) configurée pour recevoir lesdits signaux de température (61) et/ou actionner ledit ou chaque élément de réglage (62) pour régler le courant d'équilibrage entre ladite pluralité de cellules (10) **en ce que** ledit premier module de batterie (1a) est positionné au-dessus dudit deuxième module de batterie (1b) **en ce que** ladite seconde barre omnibus (32) dudit premier module de batterie (1a) coïncide avec ladite première barre omnibus dudit deuxième module de batterie (1b) et comprend :
- une partie de connexion supérieure (32a) configurée pour être connectée électriquement auxdites bornes négatives (12) de ladite pluralité de cellules (10) dudit premier module de batterie (1a) ;
- une partie de connexion inférieure (32b) configurée pour être connectée électriquement auxdites bornes positives (11) de ladite pluralité de cellules (10) dudit deuxième module de batterie (1b) ;
**et en ce que** ladite partie de connexion supérieure (32a) et ladite partie de connexion inférieure (32b) sont agencées pour connecter en série ladite pluralité de cellules (10) dudit premier module de batterie (1a) et ladite pluralité de cellules (10) dudit deuxième module de batterie (1b).

15. Procédé de fabrication d'un module de batterie comprenant les étapes de :
- positionnement d'une pluralité de cellules (10) selon au moins une rangée (15), chaque cellule (10) de ladite pluralité comportant une borne positive (11) et une borne négative (12) positionnées aux extrémités opposées ;
- disposition d'une première et d'une seconde barres omnibus (31, 32) positionnées au niveau des parties d'extrémité (2, 3) dudit module de batterie (1) opposées l'une à l'autre et configurées pour être respectivement connectées électriquement auxdites bornes positives (11) et auxdites bornes négatives (12) de ladite pluralité de cellules (10) ;
- disposition d'une pluralité de corps de support (21a à 21d) comprenant chacun une pluralité respective de parties de logement (23) configurées pour loger, en utilisation, une partie d'extrémité respective (13, 14) comprenant ladite borne positive (11), ou ladite borne négative (12), d'une cellule respective (10) de ladite pluralité de cellules, chaque corps de support de ladite pluralité étant pourvu d'un élément conducteur respectif (41) fait d'un matériau conducteur et comprenant une pluralité respective de parties de contact (43) et une partie de connexion respective (45), chaque partie de contact (43) de ladite pluralité étant adaptée pour être positionnée, lors de l'utilisation, de manière adjacente à une borne positive respective (11), ou à une borne négative respective (12) d'une cellule respective (10) de ladite pluralité de cellules (10) ;
- engagement mécanique amovible de ladite pluralité de corps de support (21a à 21d) pour forcer mécaniquement lesdites parties de connexion (45) desdits éléments conducteurs (41) à être agencées en contact avec ladite barre omnibus (31), ou avec ladite seconde barre omnibus (32), ou barre omnibus, et chaque dite partie de contact (43) à être agencée en contact, avec une borne positive respective (11) ou avec une borne négative respective (12) de ladite pluralité de cellules (10), de manière à établir la connexion électrique entre lesdites première et seconde barres omnibus (31, 32) et ladite pluralité de cellules (10) ;
ledit procédé étant **caractérisé en ce que** ledit engagement mécanique amovible est effectué par forçage élastique par un élément élastique (90) fait en matériau élastomère qui est logé dans une cavité (25) pratiquée dans au moins un corps de support (21a à 21d) de ladite pluralité, une partie de contact respective (43) dudit élément conducteur vers ladite borne positive ou négative (11, 12) de ladite cellule respective (10) le long d'une direction (110) axiale par rapport à ladite cellule (10), de telle manière à garantir ladite connexion électrique.
